# EUROPEAN PATENT SPECIFICATION

(11) **EP 0 845 724 B1**
(45) Date of publication and mention of the grant of the patent: **27.03.2002**
(21) Application number: 97926269.8
(22) Date of filing: 17.06.1997
(51) Int. Cl.: G05B 19/414, G05B 19/4063

(54) **CONTROL METHOD FOR NUMERICAL CONTROLLER**
VERFAHREN ZUR STEUERUNG EINER NUMERISCHEN STEUEREINRICHTUNG
PROCEDE DE COMMANDE D'UN DISPOSITIF DE COMMANDE NUMERIQUE

(30) Priority: 17.06.1996 JP 17545896
(43) Date of publication of application: 03.06.1998
(73) Proprietor: FANUC LTD, Minamitsuru-gun, Yamanashi 401-05 (JP)
(72) Inventor: IKEDA, Yoshiaki, Yamanashi 402 (JP)
(74) Representative: Billington, Lawrence Emlyn
(86) International application number: JP9702082
(87) International publication number: WO9749015

(56) References cited:
- EP-A- 0 051 861
- WO-A-94/28635
- WO-A-94/29968
- JP-A- 4 358 205
- JP-A- 5 173 620
- JP-A- 5 327 791
- JP-A- 7 222 247
- JP-A- 62 292 054
- US-A- 3 882 305
- US-A- 5 373 149
- Praxis der Automatisierungstechik, Gerhard Schnell "Bussysteme in der Automatisierungstechnik", 2. Auflage 1996, Friedr. Vieweg & Sohn Verlag, Seite 79

## Description

The present invention relates to a method for controlling numerical control devices from a remote place.

In a conventional system as a method for controlling numerical control devices, a network is formed by connecting a plurality of numerical control devices in a plant and a host computer by means of communication lines, and the numerical control devices are controlled by means of the host computer, whereby production control of works produced by using machine tools or the like that are controlled by means of the numerical control devices, control of the state of production progress, control of the operating state, and control of processing in case of the occurrence of abnormality and the like are carried out.

In the conventional control of the numerical control devices described above, the host computer is located in the same plant in which the numerical control devices are installed, and the numerical control devices and the host computer are connected to each other by means of the communication lines, so that a communication line and a communication apparatus must be provided for each numerical control device. In general, moreover, the control can be carried out only in one and the same plant. Accordingly, communication equipment for each numerical control device is expensive, and these numerical control devices cannot be controlled in a group from a remote place.

Further, constructing the computer and the network in order to control only several numerical control devices entails increased equipment cost, so that the numerical control devices used to be controlled preferably by hand.

If any of the numerical control devices delivers an alarm so that its operation is stopped, however, restoration work corresponding to this alarm must be carried out to restart the operation. This restoration process, however, requires an operator who has expert knowledge and is skilled in operation. It is difficult, however, to allocate such an expert operator to each numerical control device. Also in the case where the position of a failure or trouble is detected from the result of execution of a diagnostic program by the numerical control devices in order to locate the failure or trouble, it is to be desired that the diagnostic program for troubleshooting should be sent from a host computer in a remote place and that a person having more expert knowledge should make a decision about the failure.

US-A-3 882 305 discloses a numerical control method and system providing remote control and analysis of remote equipment over telephone lines, in accordance with the preambles of attached claims 1 and 5.

WO 94 28635 A discloses another remote control system in more broad terms.

Also known in a different context, for use with a single portable PC, such as a laptop computer, is a modem card formed of a card-type peripheral device. Such a card is known as a PCMCIA card, and is referred-to hereinafter in more detail. Such a card is also disclosed in, for example, WO 94 29968 A and US 5 373 149 A.

The object of the present invention is to provide a control method and system for numerical control devices, in which the numerical control devices can be easily controlled from a remote place.

According to a first aspect of the present invention there is provided a control method for a numerical control device installed at a first site, the control being effected from a remote second site having a control computer installed therein with a modem which receives signals for the computer from a telephone circuit, and which transmits signals from the computer to the telephone circuit, the first site having a modem by means of which the numerical control device communicates with the computer at the second site through the telephone circuit, characterised in that:
the modem at the first site is a card-type modem which cooperates with a radiotelephone provided at the first site for communication with the telephone circuit, and at the first site there is installed a plurality of numerical control devices each of which comprises a card interface capable of being loaded with said card-type modem, whereby any one of said numerical control devices at the first site can be selected for communication with the computer at the second site by loading the card-type modem in the card interface of the selected numerical control device.

According to a second aspect of the present invention there is provided a numerical control system comprising: a first site having a numerical control device installed therein; a second site having a control computer installed therein with a modem operable to receive signals for the computer from a telephone circuit, and to transmit signals from the computer to the telephone circuit; and the first site has a modem by means of which the numerical control device can communicate with the computer at the second site through the telephone circuit, characterised in that: the modem at the first site is a card-type modem which can cooperate with a radiotelephone provided at the first site for communication with the telephone circuit, and at the first site there is installed a plurality of numerical control devices each of which comprises a card interface capable of being loaded with said card-type modem, whereby any one of said numerical control devices at the first site can be selected for communication with the computer at the second site by loading the card-type modem in the card interface of the selected numerical control device.

When a selected one of the numerical control devices is provided with the card interface, according to the present invention, communication with the remote computer for control can be effected by means of the card interface, modem card, and radiotelephone. Even in the case where a large number of numerical control devices are arranged for service, therefore, communication between all the numerical control devices and the computer for control can be enabled by using only one radiotelephone and one modem card without requiring many telephones. As compared with the case where every numerical control device is provided with a modem and is connected to the telephone circuit for the communication with the remote computer, only one modem card and one radiotelephone are expected to be used in the present invention, so that the equipment cost is moderate.

### Brief Description of the Drawing

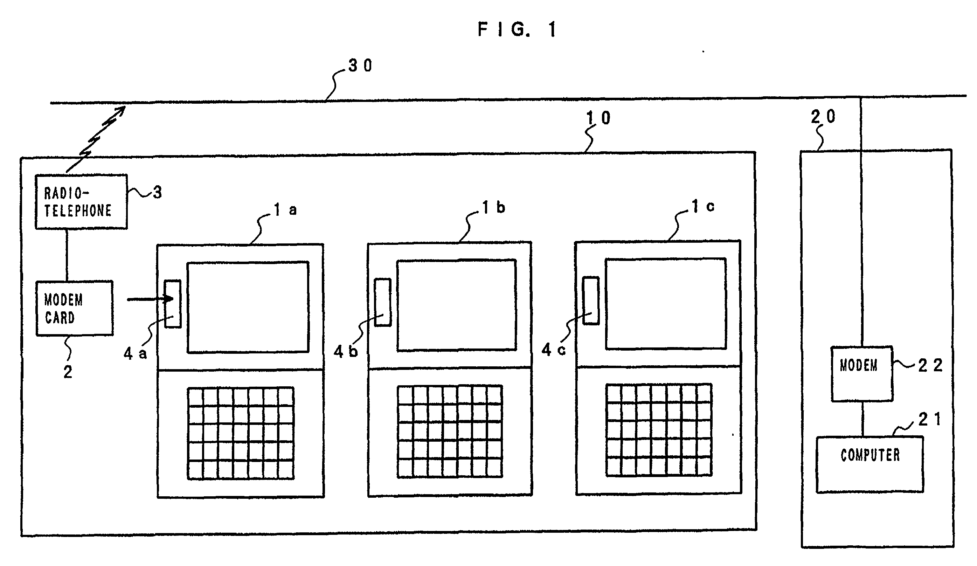

FIG. 1 is a block diagram showing one embodiment of the present invention.

As shown in FIG. 1, a plurality of computerized numerical control devices (three numerical control devices denoted by numerals 1a, 1b and 1c in FIG. 1) are installed in a plant 10. The numerical control devices 1a to 1c are provided with PC card interfaces 4a to 4c, respectively. Installed in the plant 10, moreover, are at least one modem card 2, which can be connected to the PC card interfaces 4a to 4c, and at least one radiotelephone 3, such as a cordless telephone, portable telephone, etc., capable of radio communication. This modem card 2 is formed of a card-type peripheral device (PC card) based on the "PC Card Standard" that is jointly standardized by the PCMCIA (Personal Computer Memory Card International Association) of the U.S. and JEIDA (Japan Electronic Industry Development Association) of Japan.

In an office 20 such as a service center for controlling these numerical control devices 1a to 1c, on the other hand, a computer (personal computer) 21 is connected to a general telephone circuit 30 through a modem 22.

When the computer 21 in the office 20 such as a service center is dialed from the numerical control device side, with the modem card 2 connected to the radiotelephone 3 and loaded into the PC card interface 4a of one of the numerical control devices, e.g., the numerical control device 1a, the numerical control device 1a and the computer 21 are allowed to communicate with each other. Likewise, when the computer 21 is called up with the modem card 2 loaded into the PC card interface 4b or 4c of another numerical control device 1b or 1c, the computer 21 and the numerical control device 1b or 1c are allowed to communicate with each other. Alternatively, the radiotelephone 3 may be connected beforehand to the modem card 2 by telephoning or the like. In this case, the modem card 2 is requested to be loaded in advance into the PC card interface of an objective one of the numerical control devices 1a to 1c, the radiotelephone 3 is called up from the side of the computer 21, and the computer 21 and the objective numerical control device are connected by means of the telephone circuit 30.

A communication protocol is previously settled for the communication between the computer 21 and the numerical control devices 1a to 1c. In carrying out maintenance and management, for example, necessary data for the maintenance are collected from the numerical control devices 1a to 1c into the computer 21. The numerical control devices 1a to 1c are previously stored with the respective system configurations of the individual numerical control devices, set parameters, operation careers, alarm careers for abnormality, etc. When the computer 21 collects the maintenance data, the radiotelephone 3 is connected to the modem card 2 from the office 2, and the modem card 2 is requested to be loaded into the objective numerical control device by telephoning or the like. This numerical control device is called up from the computer 21 by radio through the telephone circuit, the computer 21 and the objective numerical control device are connected, and the system configuration, set parameters, operation careers, alarm careers for abnormality, and current DI/DO data stored in the aforesaid numerical control device are collected.

The modem card 2 connected with the radiotelephone 3 is previously loaded into the PC card interface (4a to 4c) of the numerical control device to be controlled specially, among the numerical control devices 1a to 1c. If any of preset phenomena, such as abnormality in the numerical control device loaded with the modem card, completion of an expected task, etc., occurs, the radiotelephone 3 is automatically dialed to call up the computer 21 in the office 20, and phenomena (occurrence of abnormality and completion of an expected task) caused in the numerical control device are reported in the form of messages or the like to the screen of a display device that is connected to the computer 21.

When the occurrence of abnormality is automatically reported from the numerical control devices 1a to 1c, as mentioned before, or when abnormality in any of the numerical control devices that are not loaded with the modem card 2 is reported to the office 20 by telephoning or the like, the abnormal numerical control device is loaded with the modem card 2 that is connected with the radiotelephone 3, the other party is called up from the computer 21 in the office 20 or the numerical control device side, the numerical control device and the computer 21 are connected by means of the telephone circuit, a diagnostic program for the occurrence of trouble is transferred from the computer 21 to the numerical control device, and an operation command from the diagnostic program is given to the numerical control device. The numerical control device executes this received diagnostic program, and transmits results of the execution to the computer 21 in succession. The computer 21 causes the display device or the like to display the received diagnostic program results, and an operator explicates the cause of the occurrence of abnormality in accordance with the displayed contents.

Likewise, an NC program can be transferred from the computer 21 in the office 20 to the individual numerical control devices 1a to 1c. Further, control software, such as a system program, can be updated by means of the computer 21.

Since the numerical control devices 1a to 1c are connected to the general telephone circuit 30 by wireless, furthermore, they can be connected to any computers other than the computer 21 in the office 20 or the like for controlling the numerical control devices in the plant 10. For example, in case of the occurrence of abnormality in a numerical control device or at the time of routine inspection of a numerical control device, a computer of an expert or the like who carries out maintenance, repairs, inspection, etc. of a numerical control device may be connected by means of the general telephone circuit, as mentioned before. In this case, an abnormal spot of the numerical control device can be detected according to the aforesaid diagnostic program, and restoration work, inspection, and repairs can be carried out in accordance with instructions from the expert who carries out maintenance, repairs, inspection, etc.

## Claims

1. A control method for a numerical control device (1a) installed at a first site (10), the control being effected from a remote second site (20) having a control computer (21) installed therein with a modem (22) which receives signals for the computer (21) from a telephone circuit (30), and which transmits signals from the computer (21) to the telephone circuit (30), the first site (10) having a modem (2) by means of which the numerical control device (1a) communicates with the computer (21) at the second site (20) through the telephone circuit (30),
**characterised in that**:
the modem (2) at the first site (10) is a card-type modem which cooperates with a radiotelephone (3) provided at the first site (10) for communication with the telephone circuit (30), and at the first site there is installed a plurality of numerical control devices (1a,1b,1c) each of which comprises a card interface (4a,4b,4c) capable of being loaded with said card-type modem (2), whereby any one of said numerical control devices (1a,1b,1c) at the first site (10) can be selected for communication with the computer (21) at the second site (20) by loading the card-type modem (2) in the card interface of the selected numerical control device.

2. A control method for a numerical control device according to claim 1, wherein a communication protocol for reading various data on the numerical control device site (10) from said remote computer (21) is provided so that the various data on the numerical control device site (10) can be collected into said remote computer (21).

3. A control method for a numerical control device according to claim 1 or 2, wherein the card interface (4) of the selected numerical control device (1) is loaded with the modem card (2) previously connected with the radiotelephone (3) so that said remote computer (21) can be automatically dialed from the selected numerical control device (1) in accordance with a phenomenon generated in said selected numerical control device.

4. A control method for a numerical control device according to claim 1, 2 or 3, wherein the selected numerical control device (1) loaded with the modem card (2) connected with the radiotelephone (3) is stored with and executes a program transferred from said remote computer (21).

5. A numerical control system comprising: a first site (10) having a numerical control device (1a) installed therein; a second site (20) having a control computer (21) installed therein with a modem (22) operable to receive signals for the computer (21) from a telephone circuit (30), and to transmit signals from the computer (21) to the telephone circuit (30); and the first site (10) has a modem (2) by means of which the numerical control device (1a) can communicate with the computer (21) at the second site (20) through the telephone circuit (30),
**characterised in that**:
the modem (2) at the first site (10) is a card-type modem which can cooperate with a radiotelephone (3) provided at the first site (10) for communication with the telephone circuit (30), and at the first site there is installed a plurality of numerical control devices (1a,1b,1c) each of which comprises a card interface (4a,4b,4c) capable of being loaded with said card-type modem (2), whereby any one of said numerical control devices (1a,1b,1c) at the first site (10) can be selected for communication with the computer (21) at the second site (20) by loading the card-type modem (2) in the card interface of the selected numerical control device.

6. A numerical control system according to claim 5, wherein a communication protocol is previously settled for the communication between said computer (21) and said plurality of numerical control devices (1a, 1b, 1c) so that data on the selected numerical control device loaded with said modem (2) can be fetched by said computer (21) through the telephone circuit (30).

7. A numerical control system according to claim 6, wherein said computer (21) is provided with a display device, the display device displaying the data fetched by the computer (21).

8. A numerical control system according to claim 5, 6 or 7, wherein said computer (21) is loaded with a diagnostic program for the numerical control devices (1a, 1b, 1c), and can give an operation command from the diagnostic program to the selected numerical control device loaded with said modem (2), through the telephone circuit (30).

## Patentansprüche

1. Steuerungs-Verfahren für eine numerische Steuereinrichtung (1a), die an einem ersten Ort (10) installiert ist, wobei eine Steuerung von einem räumlich entfernten zweiten Ort (20) aus bewirkt wird, an dem sich ein Steuercomputer (21) befindet, in dem ein Modem (22) installiert ist, das von einer Telefonschaltung (30) Signale für den Computer (21) empfängt und das Signale von dem Computer (21) an die Telefonschaltung (30) sendet, an welchem ersten Ort (10) sich ein Modem (2) befindet, mittels dessen die numerische Steuereinrichtung (1a) durch die Telefonschaltung (30) mit dem Computer (21) an dem zweiten Ort (20) kommuniziert,
**dadurch gekennzeichnet, dass**
das Modem (2) an dem ersten Ort (10) ein Karten-Modem ist, das mit einem Funktelefon (3) zusammen arbeitet, das an dem ersten Ort (10) zur Kommunikation mit der Telefonschaltung (30) vorgesehen ist, und an dem ersten Ort eine Vielzahl von numerischen Steuereinrichtungen (1a, 1b, 1c) installiert sind, wovon jede eine Karten-Schnittstelle (4a, 4b, 4c) umfasst, in die das Karten-Modem (2) geladen werden kann, wodurch irgendeine der numerischen Steuereinrichtungen (1a, 1b, 1c) an dem ersten Ort (10) zur Kommunikation mit dem Computer (21) an dem zweiten Ort (20) durch Laden des Karten-Modems (2) in die Karten-Schnittstelle der ausgewählten numerischen Steuereinrichtung ausgewählt werden kann.

2. Steuerungs-Verfahren für eine numerische Steuereinrichtung nach Anspruch 1, wobei ein Kommunikations-Protokoll für das Auslesen verschiedenartiger Daten an dem Ort (10) der numerischen Steuereinrichtung durch den räumlich entfernten Computer (21) vorgesehen ist, so dass die verschiedenartigen Daten an dem Ort (10) der numerischen Steuereinrichtung in den räumlich entfernten Computer (21) abgeholt werden können.

3. Steuerungs-Verfahren für eine numerische Steuereinrichtung nach Anspruch 1 oder 2, wobei die Karten-Schnittstelle (4) der ausgewählten numerischen Steuereinrichtung (1) mit der Modem-Karte (2) geladen wird, die zuvor mit dem Funktelefon (3) verbunden wurde, so dass der räumlich entfernte Computer (21) automatisch von der ausgewählten numerischen Steuereinrichtung (1) in Übereinstimmung mit einem aufgetretenen Signal, das in der ausgewählten numerischen Steuereinrichtung erzeugt ist, angewählt werden kann.

4. Steuerungs-Verfahren für eine numerische Steuereinrichtung nach Anspruch 1, 2 oder 3, wobei die ausgewählte numerische Steuereinrichtung (1), die mit der Modem-Karte (2) geladen ist, die mit dem Funktelefon (3) verbunden ist, mit einem Programm, das von dem räumlich entfernten Computer (21) übertragen wird, geladen wird und dieses ausführt.

5. Numerisches Steuerungs-System, das einen ersten Ort (10), an dem sich eine numerische Steuereinrichtung (1a) befindet, die dort installiert ist, und einen zweiten Ort (20) umfasst, an dem sich ein Steuercomputer (21) befindet, in dem ein Modem (22) installiert ist, das betriebsfähig ist, Signale für den Computer (21) von einer Telefonschaltung (30) zu empfangen und Signale von dem Computer (21) an die Telefonschaltung (30) zu senden, wobei sich an dem ersten Ort (10) ein Modem (2) befindet, mittels dessen die numerische Steuereinrichtung (1a) durch die Telefonschaltung (30) mit dem Computer (21) an dem zweiten Ort (20) kommunizieren kann,
**dadurch gekennzeichnet, dass**
das Modem (2) an dem ersten Ort (10) ein Karten-Modem ist, das mit einem Funktelefon (3) zusammen arbeiten kann, das an dem ersten Ort (10) zur Kommunikation mit der Telefonschaltung (30) vorgesehen ist, und an dem ersten Ort eine Vielzahl von numerischen Steuereinrichtungen (1a, 1b, 1c) installiert sind, wovon jede eine Karten-Schnittstelle (4a, 4b, 4c) umfasst, die mit dem Karten-Modem (2) geladen werden kann, wodurch irgendeine der numerischen Steuereinrichtungen (1a, 1b, 1c) an dem ersten Ort (10) durch Laden des Karten-Modems (2) in die Karten-Schnittstelle der ausgewählten numerischen Steuereinrichtung zur Kommunikation mit dem Computer (21) an dem zweiten Ort (20) ausgewählt werden kann.

6. Numerisches Steuerungs-System nach Anspruch 5, wobei für die Kommunikation zwischen dem Computer (21) und der Vielzahl von numerischen Steuereinrichtungen (1a, 1b, 1c) zuvor ein Kommunikations-Protokoll eingerichtet ist, so dass Daten in der ausgewählten numerischen Steuereinrichtung, in die das Modem (2) geladen ist, von dem Computer (21) durch die Telefonschaltung (30) abgeholt werden können.

7. Numerisches Steuerungs-System nach Anspruch 6, wobei der Computer (21) mit einer Anzeigeeinrichtung versehen ist, welche Anzeigeeinrichtung die Daten anzeigt, die durch den Computer (21) abgeholt sind.

8. Numerisches Steuerungs-System nach Anspruch 5, 6 oder 7, wobei der Computer (21) mit einem Diagnoseprogramm für die numerischen Steuereinrichtungen (1a, 1b, 1c) geladen ist und der ausgewählten numerischen Steuereinrichtung, in die das Modem (2) geladen ist, durch die Telefonschaltung (30) einen Betriebsbefehl aus dem Diagnoseprogramm erteilen kann.

## Revendications

1. Un procédé de commande d'un dispositif de commande numérique (1a) monté en un premier emplacement (10), la commande étant effectuée à partir d'un second emplacement éloigné (20) comprenant un ordinateur de commande (21) monté à l'intérieur avec un modem (22) qui reçoit des signaux pour l'ordinateur (21) à partir d'un circuit téléphonique (30), et qui émet des signaux issus de l'ordinateur (21) vers le circuit téléphonique (30), le premier emplacement (10) comprenant un modem (2) au moyen duquel le dispositif de commande numérique (1a) communique avec l'ordinateur (21) au niveau du second emplacement (20) par l'intermédiaire du circuit téléphonique (30),
**caractérisé en ce que** :
le modem (2) au niveau du premier emplacement (10) est un modem du type à carte qui coopère avec un radiotéléphone (3) prévu au niveau du premier emplacement (10) pour communiquer avec le circuit téléphonique (30), et **en ce que**, au niveau du premier emplacement, est monté une pluralité de dispositifs de commande numérique (1a, 1b, 1c) dont chacun comprend une interface à carte (4a, 4b, 4c) susceptible d'être chargée avec ledit modem du type à carte (2), de sorte que l'un quelconque desdits dispositifs de commande numérique (1a, 1b, 1c) au niveau du premier emplacement (10) peut être sélectioné en vue d'une communication avec l'ordinateur (21) au niveau du second emplacement (20) en chargeant le modem du type à carte (2) dans l'interface à carte du dispositif de commande numérique sélectionné.

2. Un procédé de commande d'un dispositif de commande numérique selon la revendication 1, dans lequel on prévoit un protocole de communication permettant de lire, à partir dudit ordinateur éloigné (21), diverses données sur l'emplacement (10) du dispositif de commande numérique, de sorte que les diverses données sur l'emplacement (10) du dispositif de commande numérique peuvent être recueillies dans ledit ordinateur éloigné (21).

3. Un procédé de commande d'un dispositif de commande numérique selon la revendication 1 ou 2, dans lequel l'interface à carte (4) du dispositif de commande numérique sélectionné (1) est chargé avec la carte (2) du modem précédemment reliée au radiotéléphone (3) de sorte que ledit ordinateur éloigné (21) peut être automatiquement appelé à partir du dispositif de commande numérique sélectionné (1) conformément à un phénomène produit dans ledit dispositif de commande numérique sélectionné.

4. Un procédé de commande d'un dispositif de commande numérique selon la revendication 1, 2 ou 3, dans lequel le dispositif de commande numérique sélectionné (1), chargé avec la carte (2) du modem reliée au radiotéléphone (3) est mis en mémoire et exécute un programme transféré à partir dudit ordinateur éloigné (21).

5. Un système de commande numérique comprenant : un premier emplacement (10) comprenant un dispositif de commande numérique (1a) monté à l'intérieur ; un second emplacement (20) comprenant un ordinateur de commande (21) monté à l'intérieur avec un modem (22) pouvant fonctionner pour recevoir des signaux pour l'ordinateur (21) à partir d'un circuit téléphonique (30), et pour émettre des signaux issus de l'ordinateur (21) vers le circuit téléphonique (30) ; le premier emplacement (20) comprenant un modem (2) au moyen duquel le dispositif de commande numérique (1a) peut communiquer avec l'ordinateur (21) au niveau du second emplacement (20) par l'intermédiaire du circuit téléphonique (30),
**caractérisé en ce que** :
le modem (2) au niveau du premier emplacement (10) est un modem du type à carte qui peut coopérer avec un radiotéléphone (3) prévu au niveau du premier emplacement (10) pour comuniquer avec le circuit téléphonique (30), et **en ce que**, au niveau du premier remplacement, est monté une pluralité de dispositifs de commande numérique (1a, 1b, 1c) dont chacun comprend une interface à carte (4a, 4b, 4c) susceptible d'être chargée avec ledit modem du type à carte (2), de sorte qu'un quelconque desdits dispositifs de commande numérique (1a, 1b, 1c) au niveau du premier emplacement (10) peut être sélectionné en vue d'une communication avec l'ordinateur (21) au niveau du second site (20) en chargeant le modem du type à carte (2) dans l'interface à carte du dispositif de commande numérique sélectionné.

6. Un système de commande numérique selon la revendication 5, dans lequel un protocole de communication est précédemment établi pour la communication entre ledit ordinateur (21) et ladite pluralité de dispositifs de commande numérique (1a, 1b, 1c), de sorte que les données sur le dispositif de commande numérique sélectionné chargé avec ledit modem (2) peuvent être lu par ledit ordinateur (21) à travers le circuit téléphonique (30).

7. Un système de commande numérique selon la revendication 6, dans lequel ledit ordinateur (21) est muni d'un dispositif d'affichage, le dispositif d'affichage affichant les données lues par l'ordinateur (21).

8. Un système de commande numérique selon la revendication 5, 6, ou 7, dans lequel ledit ordinateur (21) est chargé avec un programme de diagnostic pour le dispositif de commande numérique (1a, 1b, 1c), et peut donner, par l'intermédiaire du circuit téléphonique (30), une instruction de fonctionnement issue du programme de diagnostic vers le dispositif de commande numérique sélectionné chargé avec ledit modem (2).
